# EUROPEAN PATENT APPLICATION

(11) **EP 4 691 764 A1**
(43) Date of publication of application: **11.02.2026**
(21) Application number: 24780106.1
(22) Date of filing: 25.03.2024
(51) Int. Cl.: B32B 27/00, C08G 59/20, C08G 59/40, C09J 7/22, C09J 7/35, C09J 7/38, C09J 11/06, C09J 123/26, C09J 163/00, H01M 8/0284, H01M 8/10

(54) **HEAT-ADHESIVE LAMINATE**

(30) Priority: 27.03.2023 JP 2023049649
(71) Applicant: Toagosei Co., Ltd., Minato-ku Tokyo 105-8419 (JP)
(72) Inventor: INATA, Kazumasa, Nagoya-shi Aichi 455-0026 (JP)
(74) Representative: Becker, Eberhard
(86) International application number: PCT/JP2024/011553
(87) International publication number: WO 2024/203988

(57) **Abstract**

One embodiment of the present invention pertains to a laminate comprising: a resin substrate; a cured product layer of an active energy ray-curable adhesive provided on at least one surface of the resin substrate; and a heat-adhesive resin layer provided on the surface on the reverse side of the cured product layer from the resin substrate, wherein the resin substrate is selected from among a polyphenylsulfone, a polyethersulfone, and a polysulfone, the heat-adhesive resin layer contains a polyolefin and/or an acid-modified polyolefin, and the adhesive is a composition containing, at a specific ratio, an (A) component which is a compound having at least two glycidyl ether groups, a (B) component which is a curable component containing an epoxy compound other than the (A) component as an essential component, and a (C) component which is a photocationic polymerization initiator.

## Description

### Technical Field

The invention relates to a heat-adhesive laminate, and the laminate can be preferably used as a member of a fuel cell or a water electrolysis device.

### Related Art

In recent years, against the backdrop of global warming issues and the social challenge of reducing CO₂ emissions, the attention to fuel cells that generate electricity using hydrogen as fuel has been increasing. In particular, the movement to replace automobile engines with fuel cells has become active in recent years. Hydrogen can be manufactured from water and solar energy. For example, hydrogen can be manufactured by electrolyzing water using electric power from solar cells. Studies on water electrolysis devices that use water and electric power, which have a structure similar to fuel cells, have also become active in recent years. Thus, solar energy, which varies greatly with seasons and time, can be stored in the form of chemical energy called hydrogen and can also be transported.

As fuel cells for automobiles, solid polymer type fuel cells are leading in widespread adoption. As detailed structures, various proposals are being studied. As one example, there is a structure in which a frame-shaped heat-adhesive sheet is used, a sheet that is a power generation part is placed on and bonded to a portion equivalent to a window in the frame, and the peripheral part is bonded to a conductive separator by hot pressing (for example, Patent Document 1). The frame-shaped heat-adhesive sheet includes a heat adhesive resin layer that strongly bonds to a metal separator by hot pressing, and a substrate (also referred to as core material) for maintaining the dimensions and shape during heating. As the core material at this time, polyethylene naphthalate (hereinafter also referred to as "PEN") and polyethersulfone (PES), which excel in heat resistance and mechanical strength, are exemplified. Also, as the heat adhesive resin layer, polyolefin resins such as polypropylene are exemplified.

The frame-shaped heat-adhesive sheet is a three-layer laminate in which heat adhesive resin layers are formed on both surfaces of the core material. However, such sheet may also be a five-layer laminate in which easy-adhesion layers are provided between layers (for example, Patent Document 2).

Since fuel cells generate water and the temperature rises to near the boiling point of water, the internal components need to have durability that can maintain practically necessary performance even in the case of long-term immersion in high-temperature water. However, in the case where PEN is used, which is exemplified in many patent documents (for example, Patent Documents 1 to 3), as the core material, PEN undergoes hydrolysis and becomes brittle, so the adhesive force between separators that is developed through the laminate is significantly reduced.

To solve this issue, it can be easily conceived to select, as the substrate, a material that excels in hydrolysis resistance and also excels in heat resistance necessary for fuel cell applications. As materials that excel in hydrolysis resistance and heat resistance, polyphenylsulfone (hereinafter also referred to as "PPSU"), polyethersulfone (hereinafter also referred to as "PESU"), polysulfone (hereinafter also referred to as "PSU"), and the like are known.

PPSU and PSU are exemplified as substrates for laminates used inside fuel cells in Patent Document 4. Also, PESU is exemplified in Patent Document 1 as described above (described as PES in Patent Document 1).

Patent Document 5 describes a gasket member for solid polymer fuel cells, which is a laminate having a substrate formed from at least one selected from the group consisting of PPSU, PESU, and PSU, and adhesive layers disposed on both surfaces thereof. The elongation at break retention rate is 60% or more after being left standing in water at 120°C for 300 hours. Also, Patent Document 6 describes a gasket member for solid polymer fuel cells having adhesive layers on both surfaces of a substrate containing PPSU.

### Prior Art Documents

### Patent Documents

Patent Document 1: Japanese Patent Application Laid-Open Publication No. 2017-103126
Patent Document 2: Japanese Patent Application Laid-Open Publication No. 2021-54880
Patent Document 3: Japanese Patent Application Laid-Open Publication No. 2019-102370
Patent Document 4: Japanese Patent Application Laid-Open Publication No. 2020-198199
Patent Document 5: Japanese Patent No. 7173419
Patent Document 6: Japanese Patent No. 7151951

### SUMMARY OF INVENTION

### Technical Problem

However, since PPSU, PESU, and PSU are materials with poor adhesion properties, it was difficult to obtain sufficient adhesive strength with the heat adhesive resin layer. In particular, it is difficult to develop adhesive strength in high-temperature water to which the materials are exposed during fuel cell operation (for example, peel strength between metal separators in water at 95°C). Furthermore, it is even more difficult to ensure that the adhesive strength maintains the required strength even after immersion in water at 120°C for a considerably longer time than 300 hours, for example, 1000 hours.

Patent Document 5 and Patent Document 6 show examples of forming an anchor coat layer using an isocyanate compound or aminoethylated acrylic polymer on a substrate (core material). Although these documents show that adhesive strength at 25°C becomes strong, the adhesive strength in water at 95°C is unclear. Also, although a durability test (elongation at break retention rate) involving immersion in water at 120°C for 300 hours is conducted, the adhesive strength after the immersion test is unclear. Furthermore, while it is unclear regarding whether sufficient adhesive strength is maintained even after immersion in water at 120°C for 1000 hours, it is difficult to render a prediction that the adhesive strength would be sufficient due to factors such as having hydrolyzable groups in the structure and not having a special hydrophobic structure. As described above, making a laminate having PPSU, PESU, or PSU as a substrate and having an olefin-based heat-adhesive resin layer on at least one surface thereof excellent in hot water resistance can be said to be an issue to be solved by a new invention.

Another issue is that so-called super engineering plastics such as PPSU, PESU, and PSU are expensive, so according to their use in frame-shaped heat-adhesive sheets inside fuel cells, there is an issue that the material cost of materials discarded during a punching process becomes high. Recycling of materials after forming the materials into a laminate is difficult. In the case of making holes in a substrate first, it is possible to recycle the recovered super engineering plastics, but it is difficult to form a heat adhesive resin layer with uniform film thickness on the substrate on which a hole is provided in advance. Moreover, in order to manufacture at low cost, a method that enables high-speed manufacturing must be devised.

As described above, how to manufacture a frame-shaped heat-adhesive laminate for fuel cells or water electrolysis devices that can significantly improve hot water immersion durability over PEN substrates by a method capable of high-speed manufacturing without disposing of large amounts of expensive super engineering plastics in waste are further issues.

The invention aims to provide a heat-adhesive laminate that exhibits favorable adhesive strength with a metal substrate and is also excellent in heat resistance and hydrolysis resistance, specifically, excellent in hot water immersion durability.

### Solution to Problem

As a result of intensive studies to solve the issues, the inventors found that the inventors can be solved by a laminate including: a resin substrate containing at least one selected from the group consisting of polyphenylsulfone, polyethersulfone, and polysulfone; a polyolefin-based heat adhesive resin layer; and a cured product layer of an active energy ray-curable adhesive containing, as essential components, Components (A), (B), and (C) in the following as an adhesive composition for bonding the components, and completed the present invention.
Component (A): a compound having two or more glycidyl ether groups in one molecule; and
Component (B): a compound having an epoxy group other than Component (A)
Component (C): photocationic polymerization initiator
Hereinafter, the invention is described in detail.

### Effects of Invention

According to the heat-adhesive laminate of the invention, favorable adhesive strength with a metal substrate can be achieved, and the hot water immersion durability can be made extremely excellent. Therefore, the lifespan of the solid polymer type fuel cell or the water electrolysis devices can be significantly improved. Moreover, according to the method for manufacturing the laminate of the invention, a heat-adhesive laminate excellent in hot water immersion durability can be manufactured while suppressing the disposal amount of expensive super engineering plastics.

### BRIEF DESCRIPTION OF DRAWINGS

[FIG. 1] FIG. 1 is a diagram showing an example of a cross-sectional view of a laminate of the invention.
[FIG. 2] FIG. 2 is a diagram showing an example of a step of making a hole smaller than a hole required for the final product in a resin substrate in an example of a method for manufacturing a laminate of the invention.
[FIG. 3] FIG. 3 is a diagram showing the vicinity of the punching step in FIG. 2 as viewed from a top perspective.
[FIG. 4] FIG. 4 is a diagram showing an example of the method for manufacturing the laminate of the invention.
[FIG. 5] FIG. 5 is a diagram showing an example of a cross-sectional view of an intermediate product after the hole smaller than the hole required for the final product in the resin substrate is made and an active energy ray curable adhesive is applied to the adhesive surface of the heat adhesive-resin film, and then the film and the adhesive are bonded together and adhered by being irradiated with active energy rays.
[FIG. 6] FIG. 6 is a diagram showing an example of holes made in the resin substrate before lamination and portions to be punched after lamination in an example of the method for manufacturing the laminate of the invention.

### DESCRIPTION OF EMBODIMENTS

The invention is as follows:[1] A heat-adhesive laminate, includes a resin substrate; a cured product layer of an active energy ray-curable adhesive provided on at least one surface of the resin substrate, and a heat-adhesive resin layer, provided on a surface of the cured product layer on a side opposite to the resin substrate. The resin substrate includes at least one selected from a group consisting of polyphenylsulfone, polyethersulfone, and polysulfone. The heat-adhesive resin layer includes polyolefin and/or acid-modified polyolefin. The active energy ray-curable adhesive includes a curable component and Component (C): a photocationic polymerization initiator, and the curable component includes, as essential components, Component (A) and Component (B) as follows:
Component (A): a compound having two or more glycidyl ether groups in one molecule; and
Component (B): a compound having an epoxy group other than Component (A).
Content ratios of Components (A) and (B) are: Component (A): 10% by weight to 99% by weight and Component (B): 1% by weight to 90% by weight in 100% by weight of a total amount of curable components, and
a content ratio of Component (C) is 0.1 parts by weight to 5 parts by weight with respect to 100 parts by weight of the total amount of curable components
[2] In the heat-adhesive laminate of [1], Component (A) includes a diglycidyl ether of aliphatic diol having 2 to 10 carbon atoms as (a1).
[3] In the heat-adhesive laminate of [2], Component B includes at least one compound selected from a group consisting of: a compound having an alicyclic epoxy group and having no ester skeleton as (b1); a compound having an alicyclic epoxy group and having an ester skeleton as (b2); and epoxidized polybutadiene as (b3).
[4] In the heat-adhesive laminate of any one of [1] to [3], Component (b2) is not contained in an amount of 50% by weight or more in 100% by weight of the total amount of curable components.
[5] The heat-adhesive laminate of any one of [1] to [4] further includes an oxetane compound as a curable component in the active energy ray-curable adhesive.
[6] The heat-adhesive laminate of any one of [1] to [5] is provided for use of a component of a solid polymer type fuel cell or a water electrolysis device.
[7] A method for manufacturing the heat-adhesive laminate of any one of [1] to [5] includes: a step (1) of applying a corona discharge treatment to an adhesive surface of the resin substrate and an adhesive surface of a resin film for forming the heat-adhesive resin layer; and a step (2) of adhering the resin substrate and the resin film by using an active energy ray-curable adhesive.
[8] The method in [7] further includes a step (3) of opening a hole on the resin substrate before the step (1); and a step (4) of opening holes penetrating the heat laminate in the holes and a peripheral portion of the holes.

Hereinafter, the resin substrate, the heat adhesive resin, the active energy ray-curable adhesive, the and method for manufacturing the heat adhesive laminate will be described in detail.

### 1. Resin substrate

A resin substrate of a heat-adhesive laminate of the invention includes at least one selected from the group consisting of polyphenylsulfone (PPSU), polyethersulfone (PESU), and polysulfone (PSU).

The resin substrate of the invention may be a mixture of the aforementioned as a main component with other resin components, may be a mixture with an additive such as an antioxidant, or may be used alone. From the viewpoint of material recyclability, it is preferable that the material is used alone or contains only an additive uniformly dissolved in the resin.

The deflection temperatures under load (ASTM D648, 1.8MPa) of PPSU, PESU, and PSU are approximately 207°C, 202°C, and 174°C, respectively, and have extremely high heat resistance among thermoplastic resins. Therefore, in the case where such materials are used as the substrate for a heat-adhesive laminate, it is possible to prevent the laminate from deflecting at the time of bonding by heat pressing.

In other words, by using such highly heat-resistant substrate, the temperature of the heat pressing step can be increased. Accordingly, it is possible to increase the adhesive strength between the heat-adhesive resin layer and the metal separator. Also, it becomes possible to use a material with a high melting point as the heat-adhesive resin layer.

PPSU, PESU, and PSU are also thought as materials with excellent hydrolysis resistance. Therefore, sterilization by steam heating is possible, and these materials are used in medical and food applications. Furthermore, since these materials also excel in mechanical properties such as impact resistance, the materials are also used as aircraft materials and sanitary pipes. Such excellent hydrolysis resistance and mechanical properties are also suitable for materials inside solid polymer type fuel cells.

The thickness of the resin substrate may be adjusted according to the specification of the final product, and is preferably 30 µm or more from the viewpoint of preventing deflection, and more preferably 50 µm or more. Also, since the product may become too large in the case of being too thick, the thickness of the resin substrate is preferably 500 µm or less, and more preferably 300 µm or less.

### 2. Heat-adhesive resin layer

The heat-adhesive resin layer of the heat-adhesive laminate of the invention contains polyolefin and/or acid-modified polyolefin.

By using polyolefin, the hydrolysis resistance becomes favorable. Moreover, by using polypropylene-based resin as the polyolefin, the heat resistance also becomes favorable.

Examples of polyolefin may include polyethylene, polypropylene, random copolymers of propylene and ethylene, block copolymers of propylene and ethylene, random copolymers of ethylene and α-olefin, block copolymers of ethylene and α-olefin, random copolymers of propylene and α-olefin, and block copolymers of propylene and α-olefin. Examples of α-olefin include 1-butene, isobutylene, 1-hexene, and 1-octene.

Among these, polypropylene-based polymers such as polypropylene, block copolymers of propylene-ethylene, random copolymers of propylene-ethylene, random copolymers of propylene and α-olefin, and block copolymers of propylene and α-olefin are preferable from the viewpoint of improving hot water resistance. Here, it is particularly preferable that the propylene unit is 50% by mass or more.

Examples of the acid-modified polyolefin may include polymers obtained by adding or graft-polymerizing acidic group-containing monomers and/or acid anhydride group-containing monomers to the polyolefin in the presence of a radical polymerization initiator such as organic peroxide. Examples may also include polymers obtained by copolymerizing raw material monomers of the polyolefin with acidic group-containing monomers and/or acid anhydride group-containing monomers. Examples of the acidic group-containing monomers include acrylic acid, methacrylic acid, crotonic acid, isocrotonic acid, maleic acid, itaconic acid, and citraconic acid. Examples of the acid anhydride group-containing monomers include maleic anhydride and citraconic anhydride.

Among these, polypropylene-based resin modified with maleic anhydride (propylene unit is 50% by mass or more) is more preferable, and maleic anhydride-modified polypropylene is particularly preferable, from the viewpoint that adhesive force with metal becomes strong and hot water resistance is also excellent. The acid value at this time is preferably in the range of 0.01 mgKOH/g to 3.0 mgKOH/g, and more preferably in the range of 0.1 mgKOH/g to 1.0 mgKOH/g.

The polyolefins may be mixed with thermoplastic elastomers other than polyolefin for the purpose of improving the adhesive force or adjusting the temperature and time during heat pressing. Also, an additive such as antioxidant may be blended for the purpose of enhancing durability.

The thickness of the heat-adhesive resin layer is preferably 10 µm or more, and more preferably 20 µm or more, from the viewpoint of adhesive force and the ability to follow unevenness. Also, from the viewpoint of suppressing the flow during heat pressing, the thickness of the heat-adhesive resin layer is preferably 100 µm or less, and more preferably 80 µm or less.

The melting point of the heat-adhesive resin layer is preferably 100°C or more, and more preferably 120°C or more, from the viewpoint of hot water durability. Also, the melting point of the heat-adhesive resin layer is preferably 200°C or less, and more preferably 180°C or less, for the purpose of shortening the heat pressing step.

In the invention, the melting point refers to the melting peak temperature measured by using a differential scanning calorimeter (DSC) at a heating rate of 10°C/min from 25°C to 230°C.

The heat-adhesive resin layer is preferably manufactured in advance as a film for forming such layer. By manufacturing the film in advance, the adhesion using the active energy ray-curable adhesive to be described later is simplified. Also, since a single film is manufactured, it becomes easy to quickly manufacture a wide resin layer with excellent thickness accuracy.

### 3. Active energy ray-curable adhesive

The active energy ray-curable adhesive of the heat-adhesive laminate of the invention is a composition containing a curable component and Component (C): photocationic polymerization initiator. The curable component contains, as essential components, Component (A) and Component (B) as follows:
Component (A): a compound having two or more glycidyl ether groups in one molecule; and
Component (B): a compound having an epoxy group other than Component (A).

The content ratio of Components (A) and (B) is Component (A): 10% by weight to 99% by weight and Component (B): 1% by weight to 90% by weight in 100% by weight of the total amount of curable components.

The content ratio of Component (C) is 0.1 parts by weight to 5 parts by weight relative to 100 parts by weight of the total amount of curable components.

In the invention, the curable component refers to a compound that cures by irradiation with active energy rays, and is a component that contains Components (A) and (B) as essential components. Hereinafter, Component (A), Component (B), Component (C), and other components will be described.

### 3. 1 Component (A)

Component (A) of the invention is a compound having two or more glycidyl ether groups in one molecule.

Specific examples of Component (A) may include:
diglycidyl ethers of aliphatic diols such as ethylene glycol diglycidyl ether, propylene glycol diglycidyl ether, 1,4-butanediol diglycidyl ether, neopentyl glycol diglycidyl ether, 1,6-hexanediol diglycidyl ether, cyclohexanedimethylol diglycidyl ether, and 1,9-nonanediol diglycidyl ether;
diglycidyl ethers of alicyclic diols such as tricyclodecanedimethanol diglycidyl ether and norbornanedimethanol diglycidyl ether;
diglycidyl ethers of alkylene glycols such as diethylene glycol diglycidyl ether, triethylene glycol diglycidyl ether, dipropylene glycol diglycidyl ether, and tripropylene glycol diglycidyl ether;
polyglycidyl ethers of aliphatic polyols such as trimethylolpropane diglycidyl ether, trimethylolpropane triglycidyl ether, pentaerythritol polyglycidyl ether, and dipentaerythritol polyglycidyl ether;
diglycidyl ethers of aromatic compounds such as hydroquinone diglycidyl ether, resorcinol diglycidyl ether, diglycidyl ether of bisphenol A (bisphenol A type epoxy resin), diglycidyl ether of bisphenol F (bisphenol F type epoxy resin), diglycidyl ether of brominated bisphenol A (brominated bisphenol A type epoxy resin), phenol novolac type epoxy resin, cresol novolac type epoxy resin, and biphenyl type epoxy resin; and
diglycidyl ethers of hydrogenated aromatic compounds such as hydrogenated bisphenol A type epoxy resin and hydrogenated bisphenol F type epoxy resin, etc.

Among the above, as Component (A), it is preferable to contain the diglycidyl ether of aliphatic diol having 2 to 10 carbon atoms as Component (a1), because the viscosity of the adhesive composition becomes low.

When the adhesive composition has low viscosity, the thickness of the adhesive layer can be reduced, and components eluting from the active energy ray-curable adhesive into hot water can be reduced.

Specific examples of Component (a1) may include: ethylene glycol diglycidyl ether, propylene glycol diglycidyl ether, 1,4-butanediol diglycidyl ether, neopentyl glycol diglycidyl ether, 1,6-hexanediol diglycidyl ether, and 1,9-nonanediol diglycidyl ether.

The content ratio of Component (A) is 10% by weight to 99% by weight in 100% by weight of the total amount of curable components.

When the content ratio of Component (A) is less than 10% by weight, the adhesive force with the resin substrate and the heat-adhesive resin layer decreases, and hot water immersion durability also decreases. When the content ratio of Component (A) exceeds 99% by weight, curability decreases.

The more preferable blending ratio of Component (A) is 10% by weight to 80% by weight, more preferably 10 to 70% by weight, in 100% by weight of the total amount of curable components, considering both the adhesive durability and the curability.

### 3.2. Component (B)

Component (B) of the invention is a compound having an epoxy group other than Component (A). By including Component (B), the curability by active energy rays can be improved.

Preferable examples of Component (B) include Component (b1), Component (b2), and Component (b3) as follows.

### 1) Component (b1)

Component (b1) is a compound having an alicyclic epoxy group and having no ester skeleton. Specific examples of Component (b1) include (3,3',4,4'-diepoxy)bicyclohexyl, dicyclopentadiene dioxide, limonene dioxide, and hydrolytic condensates of 2-(3,4-epoxycyclohexyl)ethyltrimethoxysilane (such as silsesquioxane).

### 2) Component (b2)

Component (b2) is a compound having an alicyclic epoxy group and having an ester skeleton. Specific examples of Component (b2) include 3,4-epoxycyclohexylmethyl-3,4-epoxycyclohexanecarboxylate, and bis(3,4-epoxycyclohexylmethyl)adipate.

### 3) Component (b3)

Component (b3) is epoxidized polybutadiene.

Preferably, Component (b3) is a compound in which a double bond of polybutadiene is epoxidized, and specific examples of commercially available products include NISSO-PB JP-100 and JP-200 manufactured by Nippon Soda Co., Ltd.; Epolead PB-3600 and PB-4700 manufactured by Daicel Corporation.

The content ratio of Component (B) is 1% by weight to 90% by weight, preferably 20% by weight to 90% by weight, and more preferably 30% by weight to 90% by weight, based on 100% by weight of the total amount of curable components.

However, Component (b2) is preferably 50% by weight or less based on 100% by weight of the total amount of curable components in the case of making the adhesive durability particularly excellent in hot water immersion.

### 3.3. Component (C)

Component (C) is a photocationic polymerization initiator.

Component (C) is a compound that generates strong acid by irradiation with active energy rays such as ultraviolet rays or electron beams, and can initiate cationic polymerization of an epoxy group, etc., by using the strong acid.

As Component (C), various compounds can be used as long as such compounds generate strong acid through irradiation with active energy rays, and sulfonium salt-based photocationic polymerization initiators and iodonium salt-based photocationic polymerization initiators are preferred.

Specific examples of the sulfonium salt-based photocationic polymerization initiator include triarylsulfonium salts, such as triphenylsulfonium hexafluorophosphate, triphenylsulfonium hexafluoroantimonate, triphenylsulfonium tetrakis(pentafluorophenyl)borate, and diphenyl-4-(phenylthio)phenylsulfonium hexafluorophosphate.

Sulfonium salt-based photocationic polymerization initiators are commercially available, and specific examples thereof may include CPI-100P, CPI-110P, CPI-100B, CPI-110B, CPI-101A, CPI-200K, CPI-210S, CPI-310B, CPI-310FG, CPI-410B, CPI-410S, VC-1S, VC-1FG, etc. manufactured by San-Apro Ltd.

Specific examples of the iodonium salt-based photocationic polymerization initiator include diaryliodonium salts such as diphenyliodonium tetrakis(pentafluorophenyl)borate, diphenyliodonium hexafluorophosphate, diphenyliodonium hexafluoroantimonate, di(4-t-butylphenyl)iodonium hexafluorophosphate, and tolylcumyliodonium tetrakis(pentafluorophenyl)borate.

Iodonium salt-based photocationic polymerization initiators are commercially available, and specific examples thereof include IK-1, 1K-1PC(80), IK-1FG manufactured by San-Apro Ltd., PI-2074 manufactured by Rhodia, and Omnicat 250 manufactured by IGM Resins, etc.

The content ratio of Component (C) is 0.1 parts by weight to 5 parts by weight with respect to 100 parts by weight of the total amount of curable components.

When the content ratio of Component (C) is less than 0.1 parts by weight, cationic curability becomes insufficient. In addition, when the content ratio of Component (C) exceeds 5 parts by weight, components that elute into hot water increase.

### 3.4. Other components

The active energy ray-curable adhesive of the heat-adhesive laminate of the invention can contain components other than Components (A) to (C) as long as necessary performance such as adhesive performance and curability is not affected. Examples of such components may include the following.

### 1) Curable components other than Components (A) and (B)

The adhesive used in the invention can contain a compound other than Components (A) and (B) as a curable component.

As the compound other than Components (A) and (B), an oxetane compound is preferable and can be blended for the purpose of enhancing curing speed.

In the case of blending an oxetane compound, the blending amount is preferably 50% by weight or less in 100% by weight of the total curable components in order not to reduce the adhesive force with the resin substrate.

Specific examples of the oxetane compound may include bis[(3-ethyloxetan-3-yl)methyl] ether, bis[(3-methyloxetan-3-yl)methyl] ether, bis[(oxetan-3-yl)methyl] ether, 1,4-bis[[(3-ethyloxetan-3-yl)methoxy]methyl]benzene, 1,4-bis[(3-ethyloxetan-3-yl)methoxy]benzene, 1,3-bis[(3-ethyloxetan-3-yl)methoxy]benzene, 1,2-bis[(3-ethyloxetan-3-yl)methoxy]benzene, 4,4'-bis[(3-ethyloxetan-3-yl)methoxy]biphenyl, 2,2'-bis[(3-ethyloxetan-3-yl)methoxy]biphenyl, 1,2-bis[(3-ethyloxetan-3-yl)methoxy]ethane, 1,2-bis[(3-ethyloxetan-3-yl)methoxy]propane, 1,6-bis[(3-ethyloxetan-3-yl)methoxy]hexane, 3-ethyl-3-(2-ethylhexyloxymethyl)oxetane, 3-ethyl-3-cyclohexyloxetane, 3-ethyl-3-phenoxymethyloxetane, 3-ethyl-3-hydroxymethyloxetane, and the like.

### 2) Photosensitizer

The active energy ray-curable adhesive of the heat-adhesive laminate of the invention may be blended with a photosensitizer in the case where the active energy rays are light such as ultraviolet rays. In particular, in the case where the photoinitiator is of an iodonium salt type, it is preferable to blend 0.1 parts by weight to 2 parts by weight with respect to 100 parts by weight of the total amount of curable components.

Specific examples of the photosensitizer may include anthracene compounds such as 9,10-dibutoxyanthracene and 9,10-diethoxyanthracene; thioxanthone compounds such as 2-chlorothioxanthone, 2,4-diethylthioxanthone, and isopropylthioxanthone; benzophenone compounds such as benzophenone and 4-phenylbenzophenone; acetophenone compounds such as 1-hydroxycyclohexylphenyl ketone and 2-hydroxy-2-methyl-1-phenylpropan-1-one; and the like.

### 3) Additives

The active energy ray-curable adhesive of the heat-adhesive laminate of the invention may be blended with an additive such as an antioxidant, a polymerization inhibitor, a leveling agent, an antifoaming agent, and the like.

The content ratio of the additive is preferably 1 part by weight or less, and more preferably 0.5 parts by weight or less, with respect to 100 parts by weight of the total amount of curable components.

Examples of the antioxidant include hindered phenol antioxidants, sulfur antioxidants, phosphorus antioxidants, hindered amine antioxidants, and the like. Examples of the polymerization inhibitor include amine compounds. Examples of the leveling agent and the antifoaming agent include silicone and fluorine compounds.

### 4) Resin

The active energy ray-curable adhesive of the heat-adhesive laminate of the invention may be blended with a resin such as a polymer, a tackifier, etc., for the purpose of enhancing adhesive strength and the like.

Examples of the polymer include polyethylene, polypropylene, chlorinated polypropylene, acid-modified polypropylene, polystyrene, polybutadiene, styrene-butadiene copolymers, hydrogenated products of styrene-butadiene-butadiene copolymers, and the like.

In the case of blending such resin, the blending amount is preferably 20 parts by weight or less, and more preferably 10 parts by weight or less, with respect to 100 parts by weight of the total amount of curable components, in order to secure favorable coatability by suppressing the viscosity from increasing, etc.

### 3.5. Cured product layer of active energy ray-curable adhesive

In the invention, the active energy ray-curable adhesive is cured by active energy rays such as ultraviolet rays, visible light rays, electron beams, and the like.

The coating method and the curing condition will be described in the manufacturing method to be described later. The thickness of the cured product layer is preferably 1 µm to 10 µm, more preferably 1 µm to 5 µm. By setting the thickness of the cured product layer to 10 µm or less, components that elute into hot water can be reduced. Moreover, by setting the thickness to 1 µm or more, coating defects can be reduced.

### 4. Heat-adhesive laminate

The heat-adhesive laminate of the invention includes:
a resin substrate;
a cured product layer of active energy ray-curable adhesive provided on at least one surface of the resin substrate, and
a heat-adhesive resin layer provided on a surface of the cured product layer opposite to the resin substrate.

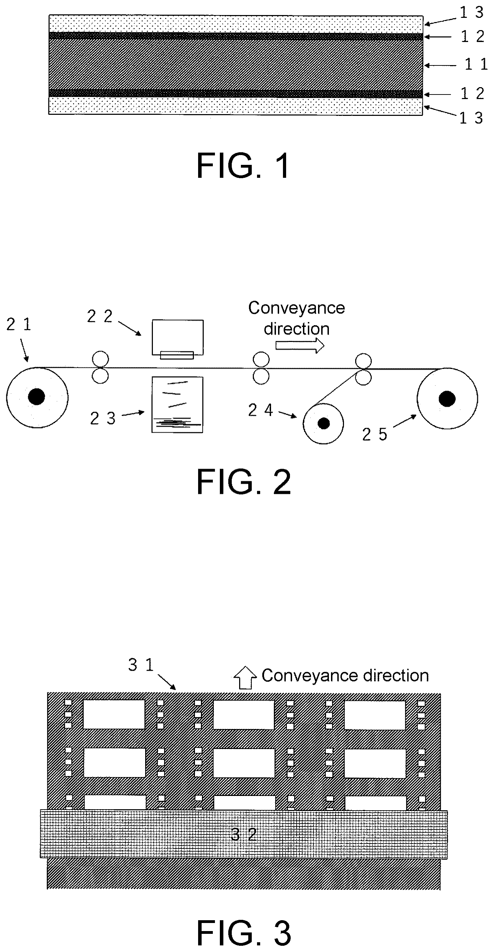

An example of the heat-adhesive laminate of the invention is shown in FIG. 1. FIG. 1 is a cross-sectional view of the heat-adhesive laminate.

In FIG. 1, a cured product layer (12) of the active energy ray-curable adhesive and a heat-adhesive resin layer (13) are laminated on both surfaces of the resin substrate (11).

As another embodiment of the invention, an example may be provided in which the cured product layer (12) of the active energy ray-curable adhesive and the heat-adhesive resin layer (13) are laminated only on one surface of the resin substrate (11).

### 5. Manufacturing method of heat-adhesive laminate

The heat-adhesive laminate of the invention is not limited by the manufacturing method thereof. However, an example of an exemplary manufacturing method and manufacturing condition is shown below.

Also, a method for manufacturing a heat-adhesive laminate having a hole in a frame shape, for example, while suppressing the disposal amount of the expensive resin substrate will be described.

### 5.1. An exemplary example of method for manufacturing heat-adhesive laminate

As the method for manufacturing the heat-adhesive laminate of the invention, it is preferable to mold the resin substrate and the heat-adhesive resin layer in advance as films or sheets respectively.

Also, it is preferable to apply a surface easy-adhesion treatment such as corona discharge treatment to the adhesive surface. Then, it is preferable to apply the active energy ray-curable adhesive composition to either of the resins, then the resins are bonded together and irradiated with active energy rays to cure and adhere the resins.

As the surface easy-adhesion treatment, corona discharge treatment is particularly preferable, but plasma treatment, surface roughening treatment, etching treatment, flame treatment, etc., may also be adopted.

Various devices can be used as the coating device for the active energy ray-curable adhesive composition, including, for example, gravure coaters, micro gravure coaters, die coaters, sprays, inkjet, dispensers, jet dispensers, screen printing, etc.

As the active energy ray, examples may include electron beams, ultraviolet rays, visible light, etc., but ultraviolet rays are most preferable. As the ultraviolet light source, examples may include high-pressure mercury lamps, metal halide lamps, electrodeless UV lamps, LEDs, etc. As the LED wavelength, examples may include 365nm, 385nm, 405nm, etc. Among the above, high-pressure mercury lamps, metal halide lamps, and electrodeless UV lamps are particularly preferable because these lamps excel in curing speed and tend to provide excellent adhesive force with the resin substrate.

The irradiation amount of the ultraviolet ray may be appropriately set according to the adhesive composition and the light source. For example, in the case where a high-pressure mercury lamp is used, it is preferable to set the irradiation amount to 100 mJ/cm² to 1,000 mJ/cm² in the UV-B region (around 310nm). By setting the irradiation amount to 100 mJ/cm² or more, curing can be carried out sufficiently, and by setting the irradiation amount to 1,000mJ/cm² or less, the manufacturing speed can be sufficient.

In the case where the active energy rays are ultraviolet rays, it is preferable to irradiate the ultraviolet rays from the side of the heat-adhesive resin layer. The is because the heat-adhesive resin layer in the invention has a polyolefin-based material as the main component and excels in ultraviolet ray transmittance.

After irradiating with active energy rays, heating to an appropriate temperature may be performed.

The heating step is not essential. Nevertheless, through heating, curing can be carried out with a small irradiation amount, and high-speed manufacturing becomes possible. As the heating temperature at this time, 60°C to 130°C is preferable, and 80°C to 110°C is more preferable. The heating time is preferably about 1 second to 2 minutes.

As the heating method, examples may include a method of passing through a heated atmosphere, a method of irradiating infrared rays, a method of wrapping around a heated roll, etc.

### 5.2. Preferable manufacturing method of heat-adhesive laminate having holes

In fuel cells or water electrolysis devices, frame-shaped laminates are used, but since the area of the holes is large, manufacturing the laminate first and then punching the product results an increase in the disposal amount of expensive resin substrates. Since the laminate of the invention uses an active energy ray curable adhesive, a manufacturing method that addresses this issue has become possible.

Hereinafter, the manufacturing method will be described using FIG.2 to FIG.6.

FIG.2 is a side view of a process of feeding out a resin substrate sheet (21) wound in a roll shape, punching holes with a punching machine (22), and winding as a roll (25).

The punched resin substrate can be collected (23) and reused as the raw material at the time of manufacturing a new resin substrate sheet. At the time of winding as a roll, although not essential, an inexpensive protective film (24) with adhesive may be attached. The protective film can prevent blocking of the resin substrate and maintain good planarity of the resin substrate with holes.

FIG.3 is a top view of the front and the back of a punching machine (22) [shown as (32) in FIG.3] of FIG.2.

In FIG.3, (32) is the punching machine, and (31) is a resin substrate film. In (31), a punched portion is the portion of the resin substrate that can be reused.

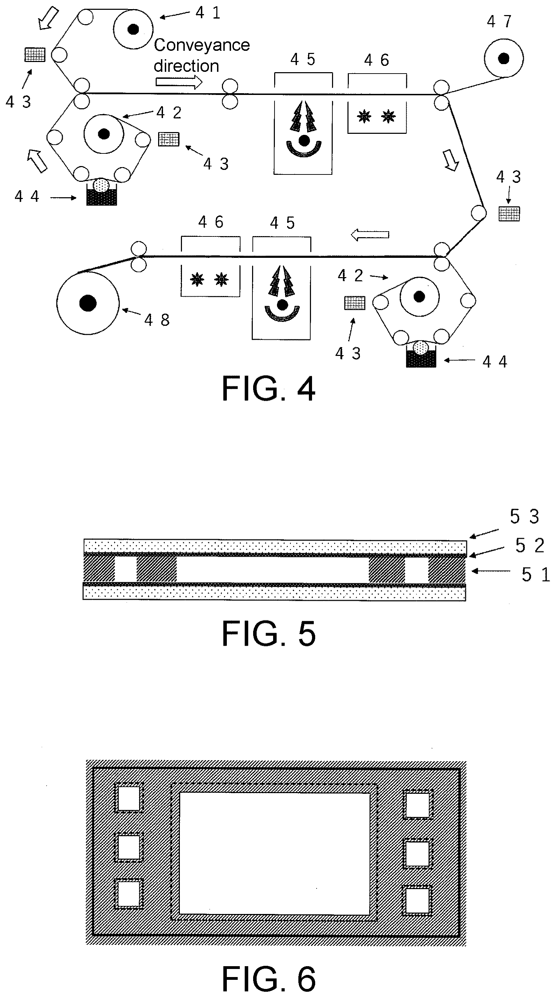

FIG.4 is a side view of a step for manufacturing a laminate by using the resin substrate (resin substrate with holes) wound in FIG.2.

A corona treatment (43) is applied to the surface of the resin substrate with holes (41) that does not have a protective film. The heat-adhesive resin film (42) is also subjected to corona treatment, and an adhesive is coated on the surface (44). The coated surface of the adhesive and the corona-treated surface of the resin substrate are bonded together, and after curing the adhesive with an ultraviolet irradiation device (45), in the example, the curing is completed by passing through a heating furnace (46).

Also, in the example, the protective film of the resin substrate is peeled off and wound (47). Next, after applying the corona treatment (43) to the newly exposed resin substrate, a heat-adhesive resin film that has been separately subjected to a corona treatment and adhesive coating is bonded, and after ultraviolet curing and heating are performed, a laminate is wound as a semi-finished product (48).

FIG. 5 shows a cross-sectional view of a portion of the laminate (48) as a semi-finished product corresponding to one frame-shaped product.

The cured product layer of the active energy ray-curable adhesive (52) and the heat-adhesive resin layer (53) cover the entire surface, but since the former is thin and the latter is made of a relatively inexpensive material, even if the area to be punched is large, the cost of the discarded material is small.

FIG.6 is a top view of the laminate (semi-finished product) shown in FIG.5, with only the resin substrate portion shown by hatching.

To obtain the final product, first, the dotted line portions in FIG.6 are punched. At this time, the white blank portions and the portions surrounded by the dotted lines become the area of the resin substrate to be discarded. This area is much smaller than punching from a laminate without holes. After punching the dotted line portions, the thick solid line portion in FIG.6 is punched.

The portion punched here is the final product, which can be suitably used as a fuel cell or a water electrolysis device.

The above is an example of a method for manufacturing a heat-adhesive laminate, including: preliminarily opening holes in the resin substrate smaller than the holes required for the final product (i.e., holes penetrating the heat laminate), applying the active energy ray-curable adhesive to the adhesive surface of the heat-adhesive resin film, then bonding the substrate and the adhesive together, irradiating with active energy rays to cure and adhere, and then opening a hole penetrating the heat laminate in a desired size required for the final product in the preliminarily opened holes and the peripheral portions thereof.

That is, this is an example for the ease of understanding and is not limiting. For example, the protective film for the resin substrate, the heating furnace, etc., are not essential. The corona treatment may be replaced with other treatment methods, or may be omitted in the case where necessary adhesiveness can be secured. The ultraviolet irradiation device may be replaced with an electron beam irradiation device. The substrate and the film do not have to be in the form of a roll and may be in the form of a sheet. The method of coating may also be replaced with spraying or screen printing.

### Examples

Examples and Comparative Examples are given below to describe the invention more specifically. However, the invention is not limited by these examples.

In the following, "parts" means parts by weight, and the numerical values indicating the blending ratios in the tables mean parts by weight.

### 1. Synthesis Example 1

In a 3L four-neck separable flask, 962g (0.48 mol as hydroxyl groups) of GI-3000 (hydroxyl value 28.0 mgKOH/g, Mn approximately 4,000) manufactured by Nippon Soda Co., Ltd. as hydrogenated polybutadiene having hydroxyl groups at both terminals, 0.75g of 2,6-di-t-butyl-p-cresol, and 448g of isobornyl acrylate (hereinafter referred to as "IBXA") were charged, and a stirrer was attached to stir, mix, and dissolve.

A thermometer, a gas introduction tube, a dropping funnel, and a reflux condenser were attached to the flask, and the solution was stirred while bubbling a mixed gas of oxygen and nitrogen (5% oxygen), and further heated to 50°C. To the solution, 0.03g of ferric acetylacetonate was added as a catalyst and dissolved, and then 66.6g (0.60 mol as isocyanate groups) of isophorone diisocyanate was charged from the dropping funnel. After stirring and mixing at 80°C for 2 hours, 17.3g (0.12 mol as hydroxyl groups) of 4-hydroxybutyl acrylate (hereinafter referred to as "HBA") was charged and reacted for 5 hours, and the disappearance of isocyanate groups was confirmed by IR spectrum, thus completing the synthesis.

The obtained product is a mixture containing 70% of polyurethane acrylate having a hydrogenated polybutadiene skeleton (hereinafter referred to as "PUA-1") and 30% of IBXA as a diluting monomer.

As a result of a GPC analysis on the obtained product, the peak of the PUA-1 component can be confirmed in a form distinguishable from the monomer component. The polystyrene-equivalent molecular weight of the PUA-1 component was 19,000 for Mn and 34,500 for Mw.

### <Molecular weight measurement>

By using a gel permeation chromatograph apparatus (HLC-8320 manufactured by Tosoh Corporation), the number average molecular weight (Mn) and the weight average molecular weight (Mw) in terms of polystyrene equivalent were obtained under the following conditions.

### ∘ Measurement conditions

- Column: TSKgel-SuperMultipore HZ-M (4.6mmID×15cm) manufactured by Tosoh Corporation ×3 columns (for low molecular weight, exclusion limit molecular weight 2,000,000)
- Column temperature: 40°C
- Eluent: tetrahydrofuran (0.35ml/min)
- Detector: RI
- Sample concentration: 0.1%

### 2. Examples 1 to 12, Comparative Examples 1 to 4

### 1) Manufacture of active energy ray curable adhesives 1 to 10, adhesives 1' and 2'

The respective components shown in Table 1 below were blended in the parts by weight shown in Table 1, and stirred and mixed according to a conventional method to obtain active energy ray curable adhesives.

The parts by weight of IK-1 (PC80) in Table 1 indicate the blending amount of this product, and the numerical value in parentheses indicates the parts by weight of Component (C) which is the active ingredient.

The abbreviations in Table 1 are defined as follows.

### • Component (A)

- BD-DGE: 1,4-butanediol diglycidyl ether (distillation purified product). Epogosay BD(D) manufactured by Yokkaichi Gosei Co., Ltd.

### ◆ Component (B)

### O Component (b1)

- CEL-8000: (3,3',4,4'-diepoxy)bicyclohexyl. Celoxide 8000 manufactured by Daicel Corporation.

### ∘ Component (b2)

- CEL-2021: 3,4-epoxycyclohexylmethyl-3,4-epoxycyclohexanecarboxylate. Celoxide 2021P manufactured by Daicel Corporation.

### ∘ Component (b3)

- JP-100: Epoxidized polybutadiene. NISSO-PB JP-100 manufactured by Nippon Soda Co., Ltd.

### ◆Component (C)

- IK-1(PC80): Iodonium salt-based photocationic polymerization initiator. IK-1(PC80) manufactured by San-Apro Ltd. 80% active ingredient, 20% propylene carbonate.
- CPI-310B: Sulfonium salt-based photocationic polymerization initiator. CPI-310B manufactured by San-Apro Ltd.

### ◆Other Components

- OXT-221: Bis[(3-ethyloxetan-3-yl)methyl] ether. Aron Oxetane OXT-221 manufactured by Toagosei Co., Ltd.
- DBA: 9,10-dibutoxyanthracene. Antracure UVS-1331 manufactured by Air Water Performance Chemical Co., Ltd. Photosensitizer.

**[Table 1]**

| | (A) | (B) | | | (C) | | Others | |
|---|---|---|---|---|---|---|---|---|
| | BD-DGE | (b1) CEL-8000 | (b2) CEL-2021 | (b3) JP-100 | IK-1 (PC80) | CPI-310B | Oxetane OXT-221 | Photosensitizer DBA |
| Adhesive 1 | 25 | 75 | | | 1(0.8) | | | 1 |
| Adhesive 2 | 50 | 50 | | | 1(0.8) | | | 1 |
| Adhesive 3 | 75 | 25 | | | 1(0.8) | | | 1 |
| Adhesive 4 | 50 | | | 50 | 1(0.8) | | | 1 |
| Adhesive 5 | 50 | | 25 | 25 | 1(0.8) | | | 1 |
| Adhesive 6 | 50 | | 50 | | 1(0.8) | | | 1 |
| Adhesive 7 | 25 | | 75 | | 1(0.8) | | | 1 |
| Adhesive 8 | 25 | 75 | | | | 1 | | |
| Adhesive 9 | 50 | | 25 | 25 | | 1 | | |
| Adhesive 10 | 25 | 25 | 25 | | | 1 | 25 | |
| Adhesive 1' | | 100 | | | 1(0.8) | | | 1 |
| Adhesive 2' | | 50 | | 50 | 1(0.8) | | | 1 |

### 2) Manufacture of active energy ray curable type adhesive 3'

To 60 parts of the product from Synthesis Example 1, 40 parts of lauryl acrylate (LA) was blended and dissolved, and then 1 part of 2,4,6-trimethylbenzoyl-diphenylphosphine oxide [manufactured by IGM Resins, trade name: Omnirad TPO] was added as a photoradical polymerization initiator and dissolved to manufacture the adhesive 3'. The composition of the adhesive composition was 42 parts of PUA-1, 18 parts of IBXA, 40 parts of LA, and 1 part of TPO.

### 3) Manufacture of substrate and heat-adhesive resin film

PPSU, PESU, and PSU were used as the substrate (core materials). Radel R-5000 manufactured by Solvay was used as PPSU, Sumika Excel 4800P manufactured by Sumitomo Chemical Co., Ltd. was used as PESU, and Ultrazone S2010 manufactured by BASF was used as PSU. By using the materials, a film with a thickness of 100 µm was manufactured by a T-die extruder. For PEN used as a substrate for Comparative Example, a film of Teonex Q51 (thickness 100 µm) manufactured by Teijin Limited was used.

As the heat-adhesive resin film, a composition (acid-modified PP-based resin) containing 95% by weight of a mixture of maleic anhydride-modified polypropylene and polypropylene (0.08% by weight of maleic anhydride unit) and 5% by weight of a styrene-ethylene/propylene-styrene block copolymer (30% by weight of styrene unit) was used, and a film with a thickness of 50 µm was manufactured by a T-die extruder.

### 4) Manufacture of heat-adhesive laminate

First, corona discharge treatment was performed on both surfaces of the substrate and one surface of the heat-adhesive resin film by using a corona discharge surface treatment device A3SW-LW manufactured by Wedge Co., Ltd. (using SUS wire electrode, distance from stage: 10 mm) at an output of 6 W/cm and processing speed of 6.7 cm/sec for one round trip (processing density 1.8 J/cm²).

Next, any one of the adhesives 1 to 10 and adhesives 1' to 3' was applied in a thickness of 4 µm onto the corona-treated surface of the heat-adhesive resin film by using a bar coater, and then the substrate was laminated by using a pressure roller. Subsequently, by using a high-pressure mercury lamp manufactured by Eye Graphics Co., Ltd, ultraviolet irradiation was performed from the side of the heat-adhesive resin film with an output of 120 W/cm, a lamp height of 15 cm, and a speed of 7 m/min (300 mW/cm² and 300 mJ/cm² in UV-B) to obtain a laminate.

By performing the same operation using another heat-adhesive resin film and the laminate, a heat-adhesive laminate was produced in which active energy ray-curable adhesive layers and heat-adhesive resin films were laminated on both surfaces of the substrate.

### 5) Thermocompression bonding of SUS plates using heat-adhesive laminate

An SUS304 plate with a thickness of 0.1 mm (hereinafter simply referred to as SUS plate) was cut into a size of 60 mm × 20 mm. Also, the heat-adhesive laminate was cut into a size of 10 mm × 55 mm. The laminate was placed on the SUS plate so that the directions of the long sides matched and was positioned toward one long side. Another SUS plate of the same size was placed on top of the laminate. The components were subjected to pressure pressing at 0.55 kN (1 MPa) for 3 seconds by using a pressure hot press machine heated to 180°C to obtain an adhered sample of SUS plates. The above operation was repeated to obtain the required number of samples.

### 6) Measurement of adhesive strength (T-peel strength) in hot water at 95°C

An adhered sample with a width of 10 mm was cut out from the adhered sample of the SUS plates described above. At this time, the end portion on the short side where the heat-adhesive laminate was not placed was cut off, and 5 sheets were cut out from one adhered sample. The SUS plate on the side where the heat-adhesive laminate was not placed was bent at 90° to make the adhered sample T-shaped. Furthermore, hooks were attached to both ends of the bent SUS plate. Meanwhile, a water bath with a hook attached to the bottom and a tensile testing machine placed above thereabove were prepared. Water at 95°C was placed in the water bath, and one hook of the adhered sample was attached. The other hook of the adhesive was attached to the hook on the side of the tensile testing machine. After immersion in 95°C water for 1 minute, T-peel strength was measured at a tensile speed of 30 mm/min. For the adhesive strength, the strength was read at a position where the tension was advanced about 2 mm from the location showing the maximum value. The above measurement was performed 3 times, and the average value was taken as the adhesive strength. The contents and results of the experiments performed are shown in Table 2.

### 7) 120°C Hot water immersion test (durability test)

The adhered sample obtained in 5) above was immersed in a pressure-resistant container filled with pure water and held at 120°C for 1000 hours. For the sample after 1000 hours, the adhesive strength was measured in the same manner as in 6) above. The results are shown in Table 2.

**[Table 2]**

| | Materials for forming laminate | | | Peeling adhesive force in hot water of 95°C | | | |
|---|---|---|---|---|---|---|---|
| | Substrate (core material) (11) | Photo-curable adhesive (12) | Heat-adhesive resin (13) | Before immersion test | | After immersion in hot water of 120°C for 1000 hours | |
| | | | | N/cm | Fractured location | N/cm | Fractured location |
| Example 1 | PPSU | Adhesive 1 | Acid-modified PP-based | 13 | (13)/SUS interface | 9 | (13)/SUS interface |
| Example 2 | PPSU | Adhesive 2 | Acid-modified PP-based | 11 | (12)/(13) interface | 7 | (11)/(12) interface |
| Example 3 | PPSU | Adhesive 3 | Acid-modified PP-based | 9 | (12)/(13) interface | 5 | (11)/(12) interface |
| Example 4 | PPSU | Adhesive 4 | Acid-modified PP-based | 10 | (12)/(13) interface | 6 | (11)/(12) interface |
| Example 5 | PPSU | Adhesive 5 | Acid-modified PP-based | 13 | (13)/SUS interface | 7 | (11)/(12) interface |
| Example 6 | PPSU | Adhesive 6 | Acid-modified PP-based | 9 | (12)/(13) interface | 3 | (11)/(12) interface |
| Example 7 | PPSU | Adhesive 7 | Acid-modified PP-based | 10 | (12)/(13) interface | 2 | (11)/(12) interface |
| Example 8 | PPSU | Adhesive 8 | Acid-modified PP-based | 13 | (13)/SUS interface | 9 | (13)/SUS interface |
| Example 9 | PPSU | Adhesive 9 | Acid-modified PP-based | 13 | (13)/SUS interface | 9 | (13)/SUS interface |
| Example 10 | PPSU | Adhesive 10 | Acid-modified PP-based | 13 | (13)/SUS interface | 9 | (13)/SUS interface |
| Example 11 | PESU | Adhesive 9 | Acid-modified PP-based | 13 | (13)/SUS interface | 9 | (13)/SUS interface |
| Example 12 | PSU | Adhesive 9 | Acid-modified PP-based | 13 | (13)/SUS interface | 9 | (13)/SUS interface |
| Comparative Example 1 | PEN | Adhesive 1 | Acid-modified PP-based | 4 | (11)/(12) interface | Fall | PEN substrate |
| Comparative Example 2 | PPSU | Adhesive 1' | Acid-modified PP-based | Fall | (11)/(12) interface | - | - |
| Comparative Example 3 | PPSU | Adhesive 2' | Acid-modified PP-based | Fall | (11)/(12) interface | - | - |
| Comparative Example 4 | PPSU | Adhesive 3' | Acid-modified PP-based | 1 | (11)/(12) interface | Fall | (11)/(12) interface |
| Comparative Example 5 | PEN | none (*) | Acid-modified PP-based | 13 | (13)/SUS interface | 0.5 | PEN substrate |

### 8) Description of Evaluation Results

In Examples 1 to 12, even after the durability test of immersion in hot water at 120°C for 1000 hours, the examples exhibited an adhesive strength of 2 N/cm or more in hot water at 95°C.

On the other hand, in Comparative Example 1 where the substrate of Example 1 was changed from PPSU to PEN, after the durability test, one of the SUS plates fell due to the slight force applied at the time when the sample was set in hot water at 95°C. According to the observation of the fracture location, the PEN substrate itself had become brittle and fractured. In Comparative Examples 2 and 3 where the active energy ray-curable adhesive did not contain Component (A), the adhesive strength with PPSU was weak even before the durability test, and one of the SUS plates fell at the time when the sample was set in hot water at 95°C. Comparative Example 4 using hydrophobic acrylate-based active energy ray-curable adhesive 3' also had a weak adhesive strength in hot water at 95°C before the durability test. Moreover, after the durability test, the adhesive strength had decreased to the extent that one of the SUS plates fell during sample setting. According to the comparison among Examples 1 to 12, in Examples 6 and 7 where the active energy ray-curable adhesive contained 50 parts by weight or more of a compound having an alicyclic epoxy group and having an ester skeleton (Component (b2)) based on 100 parts by weight of the total amount of curable components, the decrease in adhesive strength after the durability test was greater. Moreover, Example 3 using adhesive 3 containing 75 parts of Component (A) had somewhat lower adhesive strength than Examples 1 and 2 before and after the durability test. Examples 1 and 8 to 12 using adhesive 1, adhesive 8, adhesive 9, and adhesive 10 had fracture locations at the SUS interface in the T-peel test even after the durability test of immersion in hot water at 120°C for 1000 hours, and the laminates were strong. As shown in Examples 11 and 12, it is confirmed that not only PPSU but also PESU and PSU had excellent durability.

### 3. Comparative Example 5

### 1) Manufacture of heat-adhesive laminate

### OPreparation of easy-adhesion agent

An easy-adhesion agent (solid content concentration: 4% by weight) was prepared according to the following formulation. Ion-exchanged water was used as the dilution solvent.
- Acrylic resin (manufactured by Nippon Carbide Industries Co., Ltd., trade name RX7770): 85 parts by weight
- Epoxy-based crosslinking agent (manufactured by Mitsubishi Gas Chemical Company, Inc., trade name TETRAD-X): 7.5 parts by weight
- Surfactant (manufactured by Sanyo Chemical Industries, Ltd., trade name Sannonic SS-70): 7.5 parts by weight

### ○ Manufacture of resin substrate having easy-adhesion layer

Polyethylene-2,6-naphthalate (PEN) having an intrinsic viscosity of 0.60 dl/g (35°C, orthochlorophenol) was synthesized by using manganese acetate tetrahydrate as a transesterification catalyst and antimony trioxide as a polymerization catalyst. The obtained resin was dried with a 170°C dryer for 6 hours, then fed into an extruder and melt-kneaded at a melting temperature of 300°C. After extruding the resin from a die slit at 300°C, the resin was cooled and solidified on a casting drum set to a surface temperature of 25°C to produce an unstretched film. The unstretched film was guided to a roll group heated to 140°C, stretched 3.5 times in the longitudinal direction, and cooled with a roll group at 25°C.

The easy-adhesion agent was applied to both surfaces of the longitudinally stretched film by a roll coater method so that the thickness of the easy-adhesion layer in the finally obtained laminate was 50 nm respectively. Subsequently, the film was guided into a tenter while both ends of the film were held with clips, and the film was stretched 3.5 times in the transverse direction in an atmosphere heated to 135°C. In the tenter, heat setting was performed at 220°C for 40 seconds, relaxed by 1% in the width direction at 220°C, then uniformly and gradually cooled to room temperature to obtain a biaxially stretched film with a thickness of 200 µm.

### ○ Formation of heat-adhesive resin Layer

Next, the acid-modified PP-based resin layer was formed on the easy-adhesion layers on both surfaces of the obtained biaxially stretched film by an extrusion lamination method (230°C) to obtain a heat-adhesive laminate. The thickness of each of the obtained heat-adhesive resin layers was 50 µm.

### 2) Evaluation of heat-adhesive laminate

For the obtained laminate, adhesion between SUS plates, adhesive strength measurement in 95°C hot water, and 120°C hot water immersion test were performed in the same manner as in Example 1, and the results are shown in Table 2.

As a result, the adhesive strength in 95°C hot water was excellent before the durability test, but after immersion in 120°C hot water for 1000 hours, the adhesive strength significantly decreased to 0.5 N/cm. According to the observation of the fracture location, the PEN substrate itself had become brittle and fractured.

### Industrial Applicability

The heat-adhesive laminate of the invention can be suitably used as a material for thermocompression bonding of members such as metals in locations where heat resistance and hydrolysis resistance are required. In particular, it can be preferably used as a member for fuel cells and water electrolysis devices.

### [Reference Signs List]

11: resin substrate
12: cured product layer of active energy ray-curable adhesive
13: heat-adhesive resin layer
21: resin substrate film roll
22: punching machine
23: resin substrate collection box
24: protective film roll
25: punched substrate film roll
31: resin substrate film
32: punching machine
41: resin substrate film roll
42: heat-adhesive resin film roll
43: corona discharge treatment machine
44: active energy ray curable adhesive and coating machine
45: ultraviolet irradiation machine
46: heating furnace
47: protective film winding roll
48: laminate (semi-finished product) winding roll
51: resin substrate
52: cured product layer of active energy ray-curable adhesive
53: heat-adhesive resin layer

The invention of Japanese Patent Application No. 2023-049649 filed on March 27, 2023, is incorporated herein by reference in its entirety.

All documents, patent applications, and technical standards described in this specification are incorporated herein by reference to the same extent as if each individual document, patent application, and technical standard were specifically and individually indicated to be incorporated by reference.

## Claims

1. A heat-adhesive laminate, comprising:
a resin substrate;
a cured product layer of an active energy ray-curable adhesive provided on at least one surface of the resin substrate, and
a heat-adhesive resin layer, provided on a surface of the cured product layer on a side opposite to the resin substrate,
wherein the resin substrate comprises at least one selected from a group consisting of polyphenylsulfone, polyethersulfone, and polysulfone,
the heat-adhesive resin layer comprises polyolefin and/or acid-modified polyolefin,
the active energy ray-curable adhesive comprises a curable component and Component (C): a photocationic polymerization initiator, and the curable component comprises, as essential components, Component (A) and Component (B) as follows:
Component (A): a compound having two or more glycidyl ether groups in one molecule; and
Component (B): a compound having an epoxy group other than Component (A),
wherein content ratios of Components (A) and (B) are: Component (A): 10% by weight to 99% by weight and Component (B): 1% by weight to 90% by weight in 100% by weight of a total amount of curable components, and
a content ratio of Component (C) is 0.1 parts by weight to 5 parts by weight with respect to 100 parts by weight of the total amount of curable components.

2. The heat-adhesive laminate as claimed in claim 1, wherein Component (A) comprises a diglycidyl ether of aliphatic diol having 2 to 10 carbon atoms as (a1).

3. The heat-adhesive laminate as claimed in claim 2, wherein Component B comprises at least one compound selected from a group consisting of: a compound having an alicyclic epoxy group and having no ester skeleton as (b1); a compound having an alicyclic epoxy group and having an ester skeleton as (b2); and epoxidized polybutadiene as (b3).

4. The heat-adhesive laminate as claimed in claim 3, wherein Component (b2) is not contained in an amount of 50% by weight or more in 100% by weight of the total amount of curable components.

5. The heat-adhesive laminate as claimed in claim 1, further comprising an oxetane compound as a curable component in the active energy ray-curable adhesive.

6. The heat-adhesive laminate as claimed in claim 1, provided for use of a component of a solid polymer type fuel cell or a water electrolysis device.

7. A method for manufacturing the heat-adhesive laminate as claimed in claim 1, the method comprising:
a step (1) of applying a corona discharge treatment to an adhesive surface of the resin substrate and an adhesive surface of a resin film for forming the heat-adhesive resin layer; and a step (2) of adhering the resin substrate and the resin film by using an active energy ray-curable adhesive.

8. The method as claimed in claim 7, further comprising a step (3) of opening a hole on the resin substrate before the step (1); and a step (4) of opening holes penetrating the heat laminate in the holes and a peripheral portion of the holes.
